Europäisches Patentamt

European Patent Office

Office européen des brevets

(19)

(11) **EP 0 997 821 A1**

(12) **EUROPEAN PATENT APPLICATION**

(43) Date of publication:
03.05.2000 Bulletin 2000/18

(51) Int. Cl.[7]: **G06F 12/12**

(21) Application number: 99121146.7

(22) Date of filing: 22.10.1999

(84) Designated Contracting States:
**AT BE CH CY DE DK ES FI FR GB GR IE IT LI LU
MC NL PT SE**
Designated Extension States:
**AL LT LV MK RO SI**

(30) Priority: 30.10.1998 JP 31104498
06.10.1999 JP 28551299

(71) Applicant: **NEC CORPORATION**
**Tokyo (JP)**

(72) Inventor: **Saito, Yasuhiko**
**Minato-ku, Tokyo (JP)**

(74) Representative: **Betten & Resch**
**Reichenbachstrasse 19**
**80469 München (DE)**

(54) **Cache memory having a freeze function**

(57) A N-way-set associative cache memory operates in a LRU technique modified by a freeze function. The cache memory has a replacement controller (37) which modifies an access history supplied from a LRU information storage (35) by using a freeze information. The replacement controller (37) is implemented by a wired logic circuit, which simplifies the modified algorithm and operates in a higher speed.

FIG. 4

**EP 0 997 821 A1**

**Description**

BACKGROUND OF THE INVENTION

(a) Field of the Invention

The present invention relates to a cache memory having a freeze function and, more particularly, to a cache memory using least-recently-used-basis (LRU) technique modified by a freeze function.

(b) Description of the Related Art

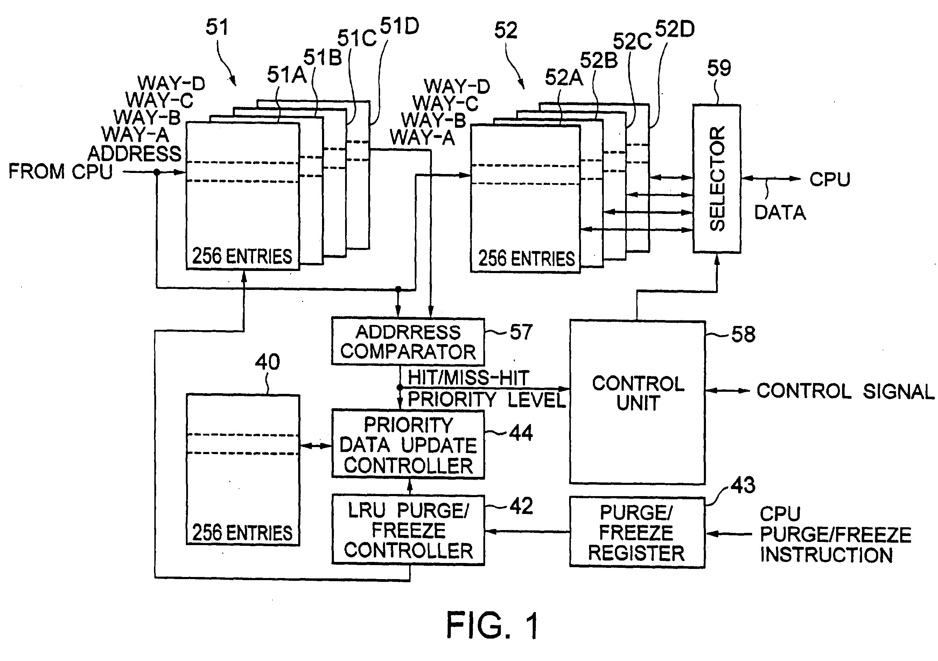

In general, a main storage device used in a computer system has a lower operational speed compared to the operational speed of the central processing unit (CPU). Such a main storage device is generally attached with a cache memory implemented by a SRAM having a higher operational speed and a smaller capacity and disposed in the internal or the vicinity of the CPU. By storing some of data or program (hereinafter simply referred to as data in most cases) in the cache memory and reading the data therefrom, the CPU operates at a higher operational speed.
In the computer system having a cache memory, when the data to be accessed by the CPU is not found (or miss-hit) in the cache memory, some of the data read by the CPU from the main storage device are stored in an empty block of the cache memory as new entry data. If there is no empty block left for the new entry data in the cache memory, one of the blocks storing therein the entry data that is least recently used in the cache memory is selected for replacement thereof to make an empty block. Thus, the new entry data can be stored in the selected one of the blocks. This process is generally called a LRU technique or LRU algorithm wherein the block storing the least-recently-used way (data) is selected among all the ways for replacement of the LEAST-RECENTLY-USED data with the new entry data. The LRU algorithm improves the efficiency of the cache memory.
However, among the programs on which the microprocessor runs, there exists a specific program which is accessed less often and yet requested to operate in a higher operational speed once it is started. A microprocessor for controlling an automobile is one of the examples therefor and will be discussed herein as to controlling a display panel and a break system.
Since the current indications of the speed and the mileage of the automobile change every moment on the display panel during a driving operation, the microprocessor runs on a panel controlling program at any time. On the other hand, a program for controlling prevention of rocking of the tires upon operation of urgent breaking is used less often than the display panel program. Thus, in the conventional cache memory, the panel controlling program is often accessed and stored in the cache memory, whereas the break controlling program is less often accessed in the cache memory and there is a low probability of the break controlling program being stored in the cache memory. That is, the program for displaying the mileage etc., which is not requested to run very quickly, occupies the cache memory, resulting in that it takes a long time for microprocessor to start for running on the break controlling program, thereby degrading the overall efficiency of the cache memory or the operational speed of the microprocessor.
To solve the above problem, it is known to provide a freeze function and a purge function in the cache memory. The freeze function is such that a specified program, on which the microprocessor must run at a high speed once it is started for operation irrespective of the access frequency thereof, is stored and subjected to freezing in the cache memory without replacement thereof. The freeze function enables the microprocessor to read and run on the specified program stored in the cache memory at any time for reducing the processing time.
The purge function is such that a program, which is accessed more frequently and yet not requested to operate the microprocessor at a higher speed, is not stored in the cache memory for a long time by releasing the program from the cache memory for generating a space therein. The purge function enables improvement of the efficiency in utilization of the cache memory and reduces the overall processing time of the microprocessor.
Patent Publication JP-A-6-110787 describes a freeze function in a set-associative cache memory wherein a single way among a plurality of ways in each set of the cache memory can be subjected to freezing. Fig. 1 shows the freeze control block in the set-associative cache memory.
The freeze control block includes a tag information storage (tag memory) 51, a data storage (data memory) 52, a purge/freeze register 43, a LRU purge/freeze controller 42, a priority data update unit 44, a LRU information storage 40, an address comparator 57, a control section 58, and a selector 59.
The tag memory 51 includes way-A (51A) to way-D (51D), and stores therein the address of the cache data in the cache memory. The tag memory 51 stores valid bits in addition to the tag data. The data memory 52 includes way-A (52A) to way-D (52D), and stores cache data therein. The data memory 52 is implemented by a semiconductor memory, such as a SRAM, having a higher access speed.
The purge/freeze register 43 determines whether the cache data stored in the data memory 52 is to be purged therefrom or subjected to freezing therein based on the instruction from the CPU, and determines the priority rank based on the data supplied from the CPU. The LRU purge/freeze controller 42 rewrites the valid bits in the tag memory 51 based on a LRU algorithm by using the data stored in the purge/freeze register 43.

The priority data update unit 44 rewrites the priority levels of the cache data stored in the LRU information storage 40 based on the control by the LRU purge/freeze controller 42. The address comparator 57 compares the accessed address supplied from the CPU or DMA (direct memory address) controller against the cache address read from the tag memory 51 based on the accessed address, thereby judging whether or not the cache memory is hit.

The control section 58 responds to the result of comparison by the address comparator 57, the priority data supplied from the LRU information storage 40 and the read enable signal supplied from outside for timing control, to thereby control the input/output of the cache memory 52 and the selector 59. The selector 59 selects one of the ways of the cache memory for storing data supplied from outside, and one of the ways of the cache memory for reading data therefrom.

In operation, when an access address is supplied from the CPU or DMA controller, the accessed address is supplied to the tag memory 51, wherein the accessed address is converted into the address used in the data memory 52 and supplied to the address comparator 57.

The priority level for each cache data is stored in the LRU information storage 40. The address comparator 57 compares the accessed address for a read operation against the address stored in the tag memory 51 to judge whether the cache data is hit or miss-hit. If the cache data is hit, the data stored in the data memory 52 is output to the CPU, whereas if the cache data is miss-hit, the data stored in the main storage device is read therefrom and stored in the data memory 52.

The priority level for each cache data specified by the purge/freeze instruction or instruction from the CPU is stored in the purge/freeze register 43. The LRU purge/freeze controller 42 controls the priority data update unit 44 based on the priority level data to handle the priority level data stored in the LRU information storage 40, thereby specifying an optimum purge/free operation. In case of purge, the LRU purge/freeze controller 42 also processes the valid bits stored in the tag memory 51, and invalidates the data corresponding to the tag address.

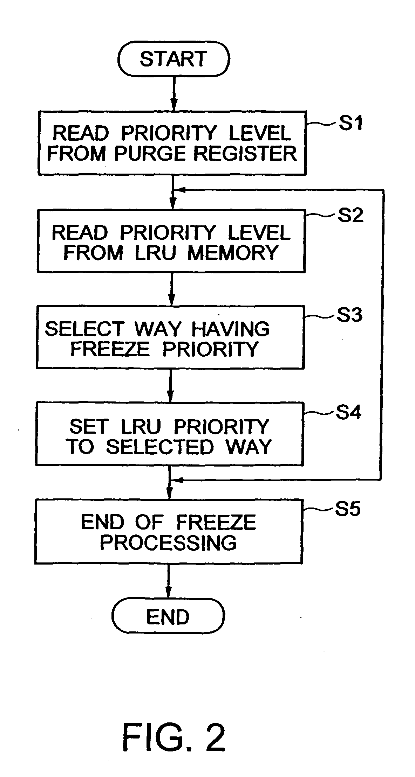

Fig. 2 shows a flowchart of a freeze operation by the LRU purge/freeze controller 42. Freeze priority data for the cache data is first read out from the purge/freeze register 43 (step S1). Then, LEAST-RECENTLY-USED data for all the entries are read out from the LRU information storage 40 (step S2), followed by modification thereof so that the way having a higher freeze priority level has a higher priority in the LRU priority level (steps S3 and S4). In these steps S3 and S4, the modification is conducted each time one of the ways in the set is accessed. For example, if a way-A has a freeze priority, the way-A is subjected to a pseudo access operation when the way-D is accessed, thereby providing the way-A with a higher LRU priority for protection. This compensates the hardware restriction wherein the priority level for the cache data not used in the system automatically falls.

As to the purge operation by the LRU purge/freeze controller 42, the priority level in terms of purge is read from the purge/freeze register 43. Subsequently, the LRU priority level information is sequentially read from all the entries of the LRU information storage 40, and is updated so that the way of the corresponding priority level becomes a lowest rank priority level. In addition, the valid bit in the tag memory 51 is made invalid for discarding the data.

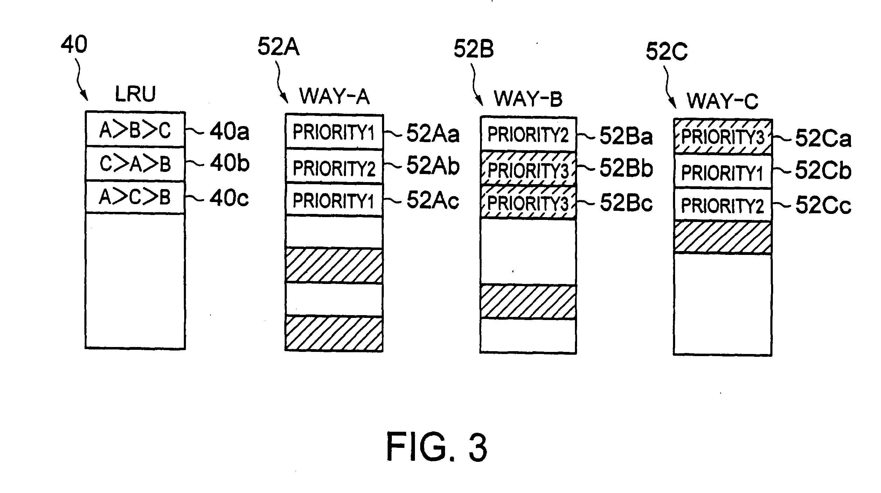

By using the above processing, the entries marked with hatching in Fig. 3, i.e., entries 52Bb, 52Bc, 52Ca, • • • which are more frequently accessed are subjected to purging/freezing.

As described above, the cache memory uses a LRU technique modified with a freeze instruction. This is conducted in accordance with the data stored in the purge/freeze register, the data including a purge/freeze instruction and the priority order specified.

In the semiconductor memory device described in the publication, the modification processing is conducted wherein the priority level information is modified for all the entries when the priority level information is read out. In addition, if the cache memory is miss-hit, the cache memory receives new accessed data, replaces the least-recently-used way by the new accessed data, and rewrites the data stored in the LRU information storage 40.

The LRU information storage 40 has entries 40a, 40b and 40c, as shown in Fig. 3, for storing replacement information, whereas the data memory has way-A (52A) including entries 52Aa, 52Ab and 52Ac, way-B (52B) including entries 52Ba, 52Bb and 52Bc, and way-C (52C) including entries 52Ca, 52Cb and 52Cc as well as way-D (not shown) including similar entries. For example, if the way-B (52B) for the entry 40b is selected for freezing, the entry 40b may include data C>A>B wherein way-C is most recently used and way-B is least recently used, as shown in the figure, irrespective of hit or miss-hit of way-C. In this case, if the cache data is miss-hit later, way-B is replaced by a new data to rewrite the LRU information storage such that B>C>A. This should be replaced by data C>B>A in the LRU information storage itself for freezing way-C. That is, the LRU information storage must be replaced upon occurrence of a miss-hit of the cache data, which raises a problem in that the modification replacement requires time for processing and reduces the efficiency of the cache memory.

To overcome the above problem, in the cache memory described in the publication, the number of ways subjected to the LRU algorithm is limited to the total number of ways minus one in each set. In the above example, the total number of ways is four, whereas the number of ways to be subjected to the LRU algorithm is three. This affords a configuration wherein each of the three ways to be subjected to freezing is not treated as the least-recently-used way, because the access history of the ways to be subjected to freezing does not indicate that each of these ways is at the fourth rank in the order of the LRU algorithm. Thus, each of these three ways is not replaced by a new data.

However, this means that the remaining way which is not subjected to freezing is replaced each time the cache data is miss-hit, whereby the original purpose for providing a plurality of ways for an efficient replacement is not achieved.

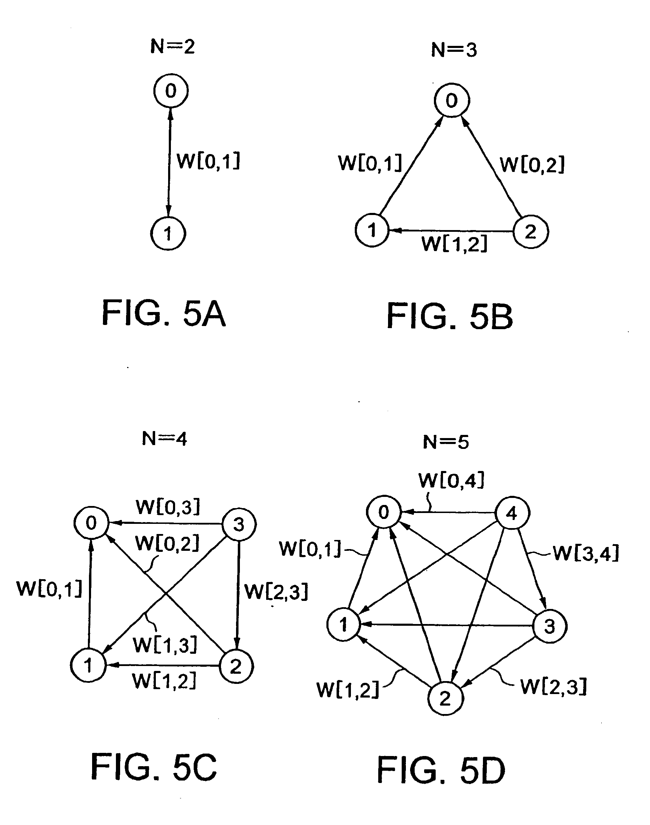

For instance, as shown in Fig. 3, the access history of way-A, way-B and way-C is stored in the LRU information storage 40, and the access history of way-D is not considered. This means that the data stored in the LRU information storage is updated in the case of hit of any one of way-A, way-B and way-C whereas the data in the LRU information storage is not updated in the case of hit of way-D. Thus, in Fig. 5, it is considered that a new data is stored in the way-D in the case of miss-hit, which means the cache memory functions as a 1-way-set associative cache memory and reduces the probability of hit and degrades the throughput of the processing by the CPU.

In addition, since the cache memory as described above can be subjected to freezing only for a single way out of the plurality of ways, when a program having a medium size corresponding to two or more of the ways in the cache memory, only a part of the program can be subjected to freezing and thus the remaining part of the program is discarded from the cache memory and iteratively taken in each time the program is accessed. This means a sufficient freeze function is not obtained in the cache memory.

SUMMARY OF THE INVENTION

It is therefore an object of the present invention to provide a cache memory having a freeze function and a higher throughput without degrading the throughput of the cache memory.

It is another object of the present invention to provide a method for controlling a cache memory having a freeze function with a higher throughput.

The present invention provides a cache memory device including a data storage section including a plurality of ways each for storing desired data, a LRU information storage section for storing access information of the plurality of ways, a freeze information storage section for storing freeze information of at least one of the ways, a replacement controller for generating a replacement information based on the access history and the freeze information without modifying said access history stored in said LRU information storage section.

In accordance with the cache memory of the present invention, since a replacement controller is provided separately from the LRU information storage, the original access history is not modified by using the freeze information each time the cache data is replaced, whereby the cache memory can operate in a higher operational speed.

The present invention also provides a method for controlling a cache memory having a plurality of ways each for storing desired data, the method including the steps of storing access information of the ways, storing freeze information of at least one of the ways, and generating a replacement information based on said access history and said freeze information without modifying the access history itself.

The above and other objects, features and advantages of the present invention will be more apparent from the following description, referring to the accompanying drawings.

BRIEF DESCRIPTION OF THE DRAWINGS

Fig. 1 is a block diagram of a conventional cache memory.
Fig. 2 is a flowchart of the freeze processing by a conventional LRU purge/freeze controller in the cache memory of Fig. 1.
Fig. 3 is a schematic diagram for the configuration of the LRU information storage and the data memory in Fig. 1 for showing a purge/freeze control.
Fig. 4 is a block diagram of a cache memory according to an embodiment of the present invention.
Figs. 5A to 5D are schematic diagrams for showing access history in a n-way-set associative cache memory, wherein n=2, 3, 4 and 5, respectively.
Fig. 6 is a list for showing access history in the cache memory of Fig. 4.
Fig. 7 is another list for showing access history in the cache memory of Fig. 4.
Fig. 8 is a block diagram of the tag memory and associated section in the cache memory of Fig. 4.
Fig. 9 is a block diagram of the data memory and associated section in the cache memory of Fig. 4.
Fig. 10 is a block diagram of the LRU information storage and associated section in the cache memory of Fig. 4.
Fig. 11 is a block diagram of the freeze memory and associated section in the cache memory of Fig. 4.
Fig. 12 is a flowchart of the freeze set processing based on freeze I/O instruction.

Fig. 13 is a schematic diagram showing the arrangement of address space in the main memory.

Fig. 14 is a flowchart of freeze set processing based on the freeze set instruction.

Fig. 15 is a block diagram of the replacing section and associated section in the cache memory of Fig. 4.

PREFERRED EMBODIMENTS OF THE INVENTION

Now, the present invention is more specifically described with reference to accompanying drawings.

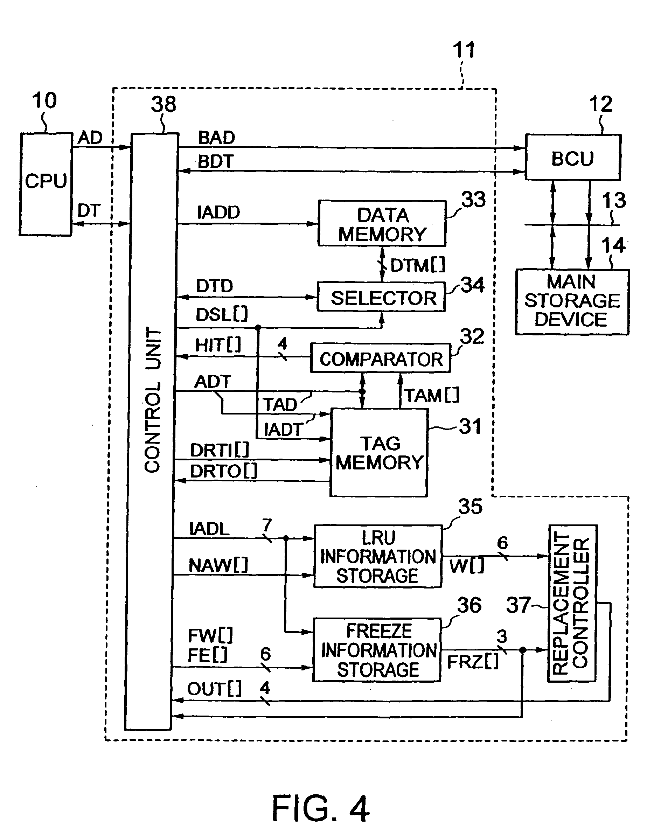

Referring to Fig. 4, a computer system including a cache memory according to an embodiment of the present invention includes a CPU 10, the cache memory 11, a bus control unit (BCU) 12, a system bus 13 and a main storage device 14. The cache memory 11 in the embodiment is implemented as a 4-way-set associative cache memory, which includes four ways in each set of the cache memory having a plurality of sets. The cache memory 11 uses a LRU algorithm, with some of ways being subjected to freezing.

The CPU 10 operates for data processing while controlling each device in the computer system. In particular, the CPU 10 supplies an address signal "AD" to the cache memory 11 to deliver/receive specified instructions or data.

The cache memory 11, upon "data hit" wherein the data corresponding to the address AD supplied from the CPU 11 is stored in the cache memory 11, supplies the data DT[] ([] is generally used in this text for sandwiching therebetween the sequential number of the way, which may be omitted sometimes) stored therein.

On the other hand, the cache memory, upon "miss-hit" wherein the data DTM[] corresponding to the address AD supplied from the CPU 10 is not stored in the cache memory 11, delivers an address signal BAD to the BCU 12 thereby, requesting the BCU 12 to effect a memory read cycle.

The BCU 12 delivers an address signal BAD through the system bus 13 to the main storage device 14, thereby receiving the data BDT from the main storage device 14. The BCU 12 then supplies the data BDT to the cache memory 11, which stores the data BDT at a specified address of the cache memory 11 and delivers the data BDT to the CPU 10. The cache memory 11, if the space for storing the new data BDT is not left in the cache memory 11, writes back (by copying-back) the least-recently-used data stored in the cache memory to the main storage device 14 and replace the least-recently used data by the new data BDT.

Thus, the CPU 10 can transfer the desired data between the same and the cache memory 11.

In Fig. 4, the cache memory 11 includes a tag memory 31, a comparator block 32, a data memory 33, a selector 34, a LRU information storage (LRU memory) 35, a freeze information storage (freeze memory) 36, a replacement controller 37, and a control unit 38. In the exemplified configuration of Fig. 4, the main storage device 14 has a storage capacity of 1 mega-byte (MB) whereas the data memory 33 of the cache memory 11 has a storage capacity of 1kB. The data memory 33 includes therein four ways, each of which has 64 separate entries therein each for storing data DTM of four bytes or 32 bits. That is, each way has a storage capacity of 256 bytes (64×4 bytes) and four ways store data of 1 kB. The main storage device 14 has 4,096 separate blocks each having a storage capacity of 256 bytes.

The bit length of the address signal AD supplied from the CPU 10 for accessing data DTM[] is 20, and the least significant two bits thereof are used as a byte address for selecting one byte out of four bytes of the data. The intermediate six bits of the address signal AD are used as an index address IAD for selecting one of 64 entries in each way. The most significant twelve bits of the address signal AD are used as a tag address for selecting one of 4,096 blocks of the main storage device 14.

The tag memory 31 stores a tag address TAD corresponding to each entry of each way and a dirty bit DRT which indicates whether or not the data stored in the main storage device 14 coincides with the data stored in the data memory 33. The tag memory 31 accesses a tag address TAD based on the index address IAD, which constitutes intermediate six bits of the address signal ADT supplied from the control unit 38, and delivers the tag address TAD stored therein to the comparator block 32. If new data DTM[] is delivered to the data memory 33 due to a miss-hit, the tag memory 31 stores the tag address TAD of the new data in the address corresponding to the specified entry of the specified way.

The control unit 38 reads a dirty bit DRTO[] from the tag memory 31 before updating the content of the data memory 33. If the dirty bit DRTO[] is "1", the data in the cache memory 11 is discarded after copying-back the data DTM[] in the data memory 33 to the main storage device 14. On the other hand, if the dirty bit DRTO[] is "0", the control unit 38 overwrites the data memory 33 with the new data.

The comparator block 32 includes comparators in number corresponding to the number of the ways in each set. Each comparator compares the tag address TAD[], which is the most significant twelve bits of the address signal AD, supplied from the control unit 38 against the tag address TAM[] supplied from the tag memory 31, to deliver an output "1" as a hit signal upon coincidence, and an output "0" as a miss-hit signal upon mismatch. The hit signals for way-0 to way-3 are expressed herein HIT[0] to HIT[3], respectively.

The data memory 33 has a memory corresponding to 64 entries of four ways for storing data DTM. When an index address IADD is supplied thereto, the data corresponding to the entry in four ways specified by the index address IADD are supplied from/to the data memory 33.

The selector 34 selects data DTM[] in the way, which is hit among the data read from the data memory 33, based on a selection signal DSL[] corresponding to a hit signal HIT[], and delivers the selected data to the control unit 38 as data DTD[]. The selector 34 also selects one of the ways for replacement of the data therein based on a selection signal DSL[] corresponding to a replace signal OUT[], and delivers the data in the selected way to the data memory 33.

The LRU information storage 35 stores access history for each entry, which indicates the access order for the ways in the data memory 33. When an index address IADL is supplied from the control unit 38, the LRU information storage 35 delivers the 6-bit access history corresponding to the input index address. If the cache memory is hit, the control unit 38 delivers new accessed way signal NAW[] corresponding to the hit signal HIT[] each time the hit signal HIT[] is delivered from the comparator block 32. Based on the new accessed way signal NAW[], the LRU information storage 35 updates the contents thereof as an access history. In this case, NAW[n]=HIT[n] wherein n=0 to 3.

On the other hand, when the cache memory is miss-hit, the control unit 38 delivers a new accessed way signal NAW[] corresponding to a replacement signal OUT[] to the LRU information storage 35. The LRU information storage 35 retrieves, based on the new accessed way signal, an access history corresponding to the index address IADT from the memory array of the LRU information storage 35, delivers information DSL of the least-recently-used way to the selector 34, and stores the new accessed data DTM[] in the data memory 33. In this case, NAW[n]=OUT[n], wherein n=0 to 3.

The freeze memory 36 stores freeze information for freezing ways for each entry therein based on the instruction from the CPU 10. When an index address IADL is supplied from the control unit 38, the freeze information storage 36 delivers a 3-bit freeze information FRZ[] corresponding to the index address. The freeze memory 36 also writes a freeze information FRZ[] at the address corresponding to the index address when a freeze write data FW[] and a freeze write enable signal FE[] are supplied thereto from the control unit 38. A 3-bit freeze information FRZ[] can be used for specifying freezing of three ways out of four ways. In the following description, it is assumed that way-0 to way-2 are specified for freezing, and freeze information thereof is specified by FRZ[0] to FRZ[2].

The replacement controller 37 delivers a replacement signal representing which way is to be replaced by a new data based on the access history (or LRU information) W[A,B] supplied from the LRU information storage 35 and the freeze information FRZ[] supplied from the freeze information storage 36. The replacement signal includes four bits OUT[0] to OUT[3] corresponding to ways-0 to way-3.

In a "hit" operation, an address signal AD is supplied from the CPU 10 to the control unit 38 and temporarily stored therein. The index addresses IADD and IADT included in the address signal AD as intermediate six bits are supplied to the data memory 33 and the tag memory 31. In this case, both the index addresses IADD and IADT are identical. The content of the tag memory 31 corresponding to the index address IADT is read from each of the four ways way-0 to way-3, and input to each of the four comparators in the comparator block 32. At the same time, the data DTM[] of the four ways corresponding to the index addresses IADD are read out to the selector 34.

On the other hand, the tag address TAD among the address AD delivered from the control unit 38 is supplied to the other input of the comparator 32, and compared therein against the tag address TAM supplied from the tag memory 31. The comparator 32 then delivers a hit signal HIT[L]=1 which represents that one (L) of the four ways is hit, with hit signals HIT[N] of the remaining ways being set at "0" wherein $0 \leq N \leq 3$ and $N \neq L$.

The control unit 38 generates a selection signal DSL and a new-accessed way signal NAW[] based on the hit signal HIT[] and delivers the selection signal DSL[] to the selector 34 and the new-accessed way signal NAW[] to the LRU information storage 35. The selector 34 selects the data DTM stored in the way corresponding to the selection signal DSL to deliver the same to the CPU 10.

Thereafter, the LRU information storage 35 rewrites the access history based on the new-accessed way signal NAW[] corresponding to the hit signal HIT[] to indicate that the new-hit way is the most recently-used way.

In case of "miss-hit" of the cache memory, the operations up to the comparison by the comparator block 32 are similar to the case of "hit" as described above. If the comparator block 32 delivers HIT[n]="0", wherein n=0 to 3, to indicate that the new-accessed data does not hit any of the four ways in the cache memory, the control unit 38 delivers the address signal BAD stored therein to the BCU 12, which reads data BDT from the main storage device 14 based on the address BAD.

The control unit 38 delivers the index address IADL corresponding to the address signal BAD to the LRU information storage 35 and the freeze information storage 36 along with the read-out of the data stored in the main storage device 14. In response thereto, the LRU information storage 35 and the freeze information storage 36 deliver the access history W[] and the freeze information FRZ[], respectively, to the replacement controller 37. The replacement controller 37 generates, based on the received signals, a replacement signal OUT[] and delivers the same to the control unit 38, which in turn delivers a selection signal DSL[] corresponding to the replacement signal OUT[].

The data BDT read through the BCU 12 is input to the control unit 38, and then delivered to the CPU 10. The control unit 38 supplies the index address IADD corresponding to the address signal BAD to the data memory 33, and pass the data BDT to the selector 34 as data DTD. The control unit 38 examines the dirty bit DRTO[] stored in the tag memory 31, writes back the content of the data memory 33 to the main storage device 14 if the content of the data memory 33 is different from the content of the main storage device 14. Thereafter, the selector 34 delivers the data DTM[]=DTD to the way specified by the selection signal DSL in the data memory 33. The data memory 33 stores the data DTM[] at the location specified by the index address IADD.

Subsequently, the control unit 38 outputs the new-accessed way signal NAW[] representing information of the replaced way to the LRU information storage 35, which rewrites the access history based on the new-accessed way signal. In this case, NAW[n]=OUT[n] wherein n=0 to 3.

Basically, storage of the data to the cache memory 11 is conducted similarly to the case of the read-out of the data from the cache memory 11 as described above.

The control of the LRU information storage 35 will be detailed hereinafter. Figs. 5A to 5D show bits W[A,B] of the access history to be stored in the LRU information storage 35 for n-way-set associative cache memory, wherein n=2 to 5, respectively. In each of Figs. 5A to 5D, bit W[A,B] for way-A and way-B assumes "1" if way-A shown at the tip of the arrow is more recently accessed, and assumes "0" if way-B shown at the base of the arrow is more recently accessed.

For the examples shown in Fig. 5A to 5D, the LRU information storage 35 includes a number of memory cells corresponding to the product of the number of bits used for specifying the access history among all the ways shown in these drawings by the number of entries provided in each way.

In the examples shown in Figs. 5A to 5D, the number (Q) of bits used for defining the access history is represented by the following equation:

$$Q = \sum_{i=2}^{n} (i-1) = n(n-1)/2.$$

Thus, the number of bits used for specifying the access history in Figs. 5A to 5D are 1, 3, 6 and 10, respectively, corresponding to n=2 to 5.

For example, if W[0,1] is "0" in each of Figs. 5A to 5D, it represents that way-1 is more recently accessed with respect to way-0. In this case, if way-0 is hit later, W[0,1] assumes "1" whereas, if way-1 is hit later, W[0,1] remains at "0".

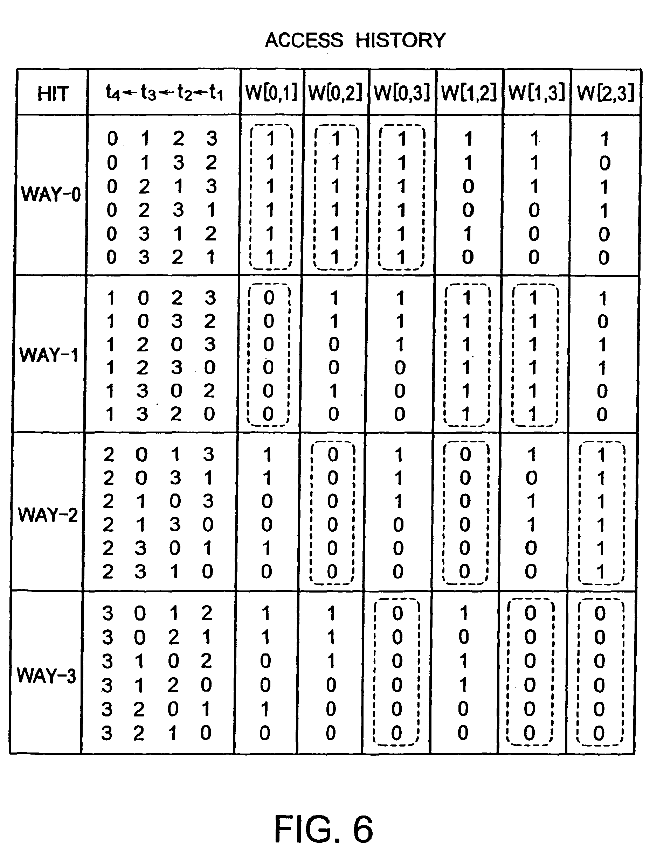

Fig. 6 shows a table corresponding to the 4-way-set associative shown in Fig. 5C, wherein the bit W[A,B] of the access history between each two of the ways way-A and way-B is shown for every case of access history among way-0 to way-3. The left column shows the access history among the ways (t4←t3←t2 ←t1) classified in each block based on the most recently accessed way, whereas the six right columns represent respective bits W[A,B] of the access history. For example, if ways are hit in the order of way-2← way-1←way-3←way-0 wherein way-2 is the most recently accessed way and way-0 is the least-recently-used way, the six bits of the access history assume "000011" for W[0,1] to W[2,3]. In addition, if way-1 is hit after the access history of "000011", the order of the access history changes to way-1←way-2 ←way-3←way-0 and the six bits of the access history assume "000111" for W[0,1] to W[2,3].

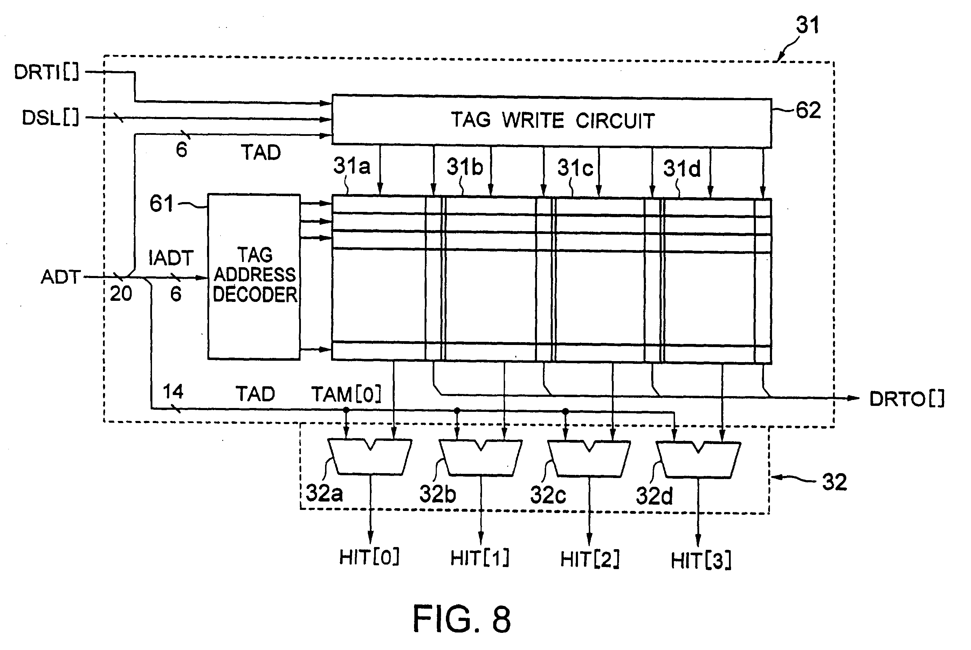

Referring to Fig. 8 showing the detail of the tag information storage (tag memory) 31 and the comparator block 32, the tag memory 31 includes a tag address decoder 61, a tag data write circuit 62, and a memory cell array including four memory blocks 31a to 31d, and the comparator block 32 includes four comparators 32a to 32d.

Each of the memory blocks 31a to 31d is disposed for a corresponding one of the ways in the data memory 33 to store a tag address TAD of each entry in the way and a dirty bit DRT which represents whether or not the content of the main storage device 14 coincides with the content of the data memory 33. Each of the memory blocks 31a to 31d is implemented by a SRAM having a capacity corresponding to the product of the number (4) of ways by the number (64) of entries by the sum of the number (14 bits) of address lines plus one bit, i.e., a 3840-bit SRAM.

The tag address decoder 61 receives the intermediate six bits of an index address IADT from the control unit 38, decodes the intermediate six bits to activate one of the word lines of the memory blocks 31a to 31d, thereby selecting one of the entries in the way. The memory blocks 31a to 31d deliver the tag information TAM[0] to TAM[3] of the selected entry to the comparator block 32 and deliver the dirty bits DRTO[] to the control unit 38.

The tag write circuit 62 receives an index address IADT, a selection signal DSL[] and a dirty bit write information DRTI[] from the control unit 38. If the accessed data is miss-hit, the tag write circuit 62 writes a new tag address TAD in the entry specified by the index address ADT disposed in the way specified by the selection signal DSL[], and also stores "0" in the dirty bit DRT. If the accessed data is hit, the tag write circuit 62 writes "1" in the dirty bit DRT while maintaining the tag address TAD as it is.

The memory blocks 31a to 31d output the tag addresses TAM [0] to TAM [3] specified by the index address IADT of the medium six bits of the address signal ADT to the comparators 32a to 32d, respectively, and stores the tag address TAD supplied from the tag write circuit 62. The memory blocks 31a to 31d store and read the dirty bits DRT similarly. The dirty bits read out from the memory blocks 31a to 31d are delivered to the control unit 38 as a dirty bit read information DRTO[].

The control unit 38 examines the dirty bit read information DRTO[], and writes back the data DTD to the main storage device 14 before updating the content of the data memory 33 if the dirty bit read information DRTO[] is "1". On the other hand, if the dirty bit read information DRTO[] is "0", the control unit 38 overwrites the data memory 33 with the new data DTD. In addition to the functions as described above, the control unit 38 has a function for holding the address signal ADT supplied from the CPU 10, to output the tag address TAD which is the most significant bits of the address signal, the index address IAD which is the intermediate bits of the address signal, and the byte address (word address) which is the least significant bits of the address signal.

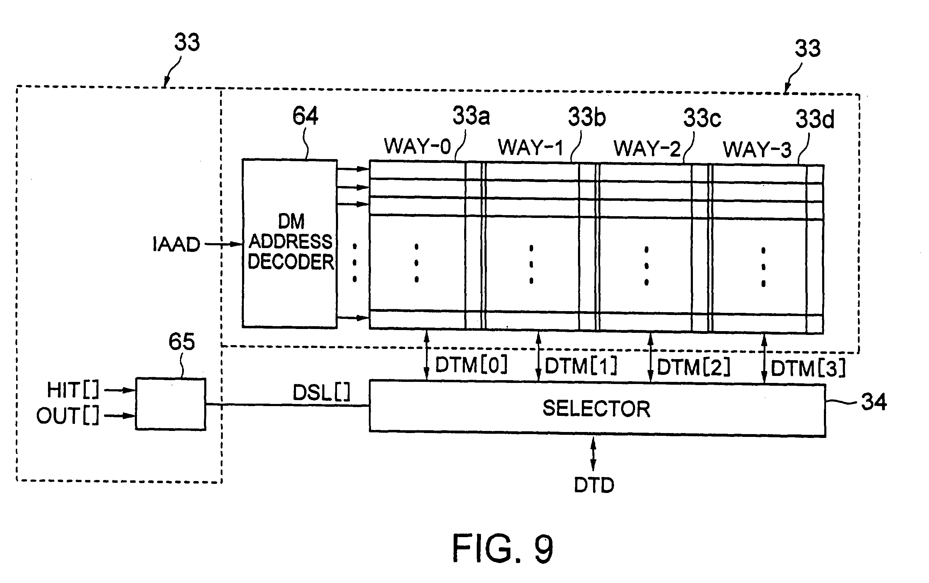

Referring to Fig. 9, the data memory 33 includes a data memory address decoder (DM address decoder) 64 and a memory cell array including four memory blocks 33a to 33d corresponding to the four ways. The data memory 33 stores the tag address TAD stored in the tag memory 31 and the data DT stored in the main storage device 14 at the address corresponding to the index address IADD.

The memory blocks 33a to 33d store the tag addresses stored in the respective blocks 31a to 31d of the tag memory 31, and the data stored in the main storage device 14 at the address specified by the index address IADD. The index address IADD differs from the index address IADL in the access timing. The data memory 33 is implemented by a SRAM having a storage capacity corresponding to the product of the number of ways in the cache memory 11 by the number of entries in each way by the number of bytes of each entry for each way, namely $4 \times 64 \times 4 \fallingdotseq 1$ k-bytes, in this example.

The DM address decoder 64 receives the index address IADD, i.e., the intermediate six bits of the address signal supplied from the control unit 38, to decode the same for activating one of the word lines of the data memory 33 corresponding to one of the entries. The memory blocks 33a to 33d output data DTM[0] to DTM [3] of the selected entry to the selector 34.

The selector 34 selects one of the four data DTM[0] to DTM[3] read from the location specified by the index address based on the way for which the comparator block 32 detected a coincidence, and then delivers the selected data to the control unit 38 as data DTD. Upon miss-hit of the cache data wherein the data memory 33 is to be overwritten by a new accessed data, the data memory 33 stores data DTD read from the main storage device 14 by selecting the entry similarly to the read-out of the data DTM[].

More specifically, the selector 34 receives data DTM[0] to DTM[3] from the memory blocks 33a to 33d of the data memory 33, and selects one of the data DTD based on the selection signal DSL[] supplied from the control unit 38 upon hit of the cache memory, and then delivers the selected data DTD to the control unit 38, the selection signal DSL[] specifying one of the ways in the data memory 33. Upon miss-hit, the selector 34 delivers the data BAD read from the main storage device 14 to one of the ways specified by the selection signal DSL. The data is stored as a new data DTM[] in the entry specified by the index address IADD.

The control unit 38 includes therein an internal selector 65, which selects one of the hit signal HIT[] and a replacement signal OUT[] and delivers the selected on to the selector 34 as a selection signal DSL. That is, upon hit of the cache memory, $DSL[n]=HIT[n]$ whereas upon miss-hit, $DSL[n]=OUT[n]$, wherein n=0 to 3.

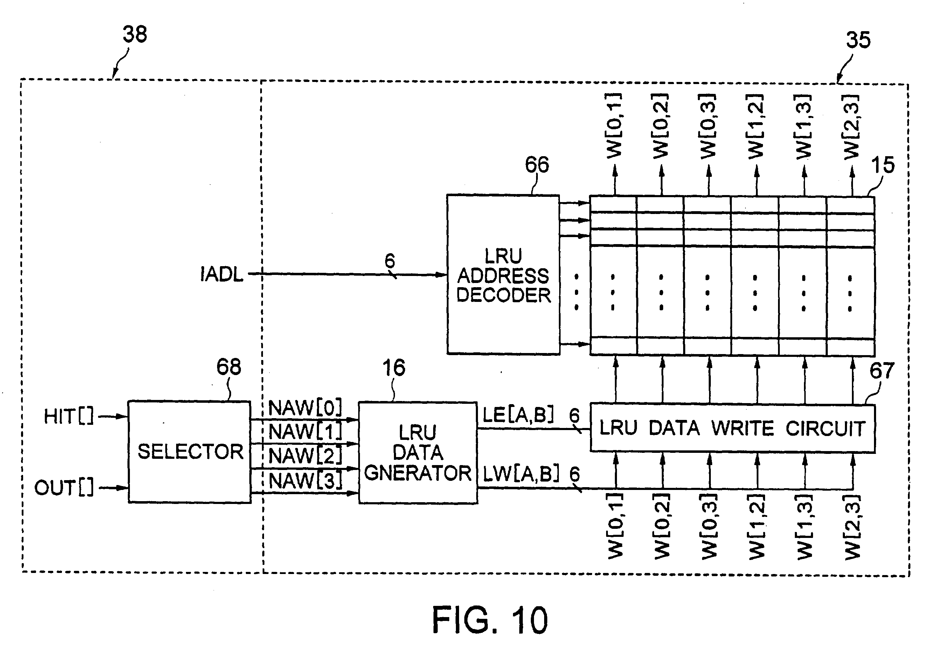

Referring to Fig. 10, the LRU information storage 35 includes a LRU address decoder 66 for decoding index address IADL, a memory cell array 15 including six memory blocks each for storing a bit of access history for each entry, a data generator 16 for generating LRU information data, and a write circuit 67 for writing the LRU information to the memory blocks 15.

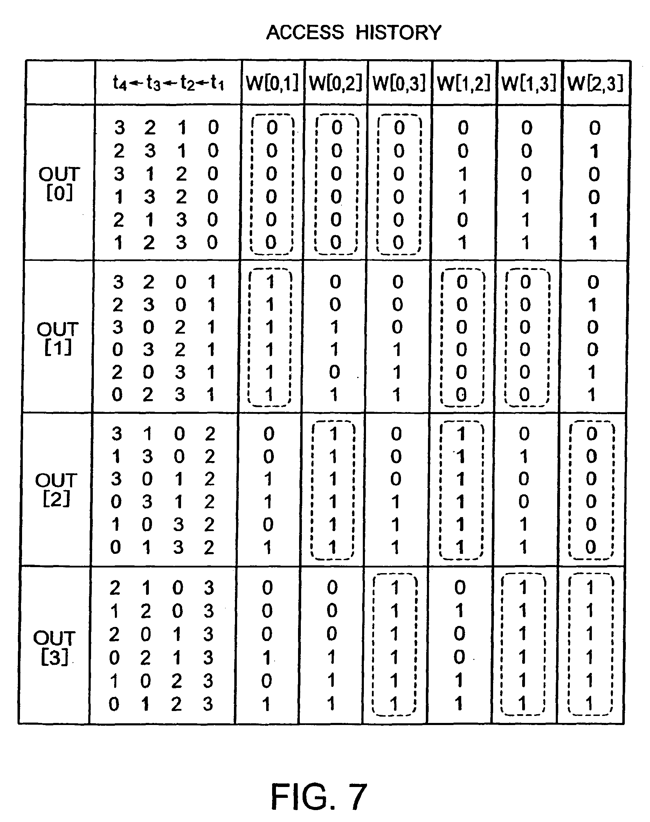

The memory blocks 15 store the access history for each of the entries with a 6-bit information. Each of the memory blocks 15 stores a corresponding bit W[A,B] such as shown in Figs. 6 and 7. Fig. 7 shows the bits of the access history with the least-recently-accessed way in a block. For example, the first block shows the case wherein way-0 is the least-recently-used way, and defines a bit of replacement signal OUT[0].

The memory blocks 15 of the LRU information storage 35 is implemented by a SRAM having a storage capacity corresponding to the product of the number of entries in each way by the number of bits of the access history for the ways, i.e., $64 \times 6=384$ bits.

The LRU address decoder 66 receives the index address IADL supplied from the control unit 38 to decode the same for activating one of the word lines. The memory blocks 15 deliver the bits of access history for a selected entry to the replacement controller 37.

Another internal selector 68 provided in the control unit 38 selects one of a hit signal HIT[] and a replacement signal OUT[] and delivers the selected signal as a new-accessed way signal NAW[] to the LRU data generator 16. Upon hit, $NAW[n]=HIT[n]$ wherein n=0 to 3, whereas upon miss-hit, $NAW[n]=OUT[n]$.

The LRU data generator 16 generates a 6-bit LRU write data LW[] and a 6-bit LRU write enable signal LE[] based on NAW[], and delivers the same to the memory blocks 15 for updating the content thereof

Here, one of the bits of a 6-bit LRU write enable signal and one of the bits of a 6-bit LRU write data are represented by LE[A,B] and LW[A,B], respectively, for way-A and way-B. The write data LW[A,B] are such that LW[A,L]=0 and LW[L,B]=1 where A<L<B, after way-L is hit. In this case, the write enable signal can be expressed by LE[A,L]=LE[L,B]=1 .

In the LRU algorithm, the access history is defined by the fact as to which way is most recently accessed between each two of the ways for every combination of the ways. Thus, N(N-1)/2 bits are used for representing the access history for N ways. The access history including a plurality of bits W[A,B] is stored in the memory blocks 15 of the LRU information storage 35.

The access history W[] is updated each time the cache memory 11 is hit and accessed to store the most recent data, wherein hit data is changed to the most recently accessed data. If the cache memory is miss-hit, the access history is updated so that the new data that replaced the least-recently-used data is defined as the most-recently-used data. In this case, however, if the most-recently-used data is hit again, the data is not replaced.

Upon updating the access history, the LRU data generator 16 generates the access history as shown in Table-1 based on the information of hit or replacement of the way.

Table-1

| Hit | LW[0, 1] | LW[0, 2] | LW[0, 3] | LW[1, 2] | LW[1, 3] | LW[2, 3] |
|---|---|---|---|---|---|---|
| Way-0 | 1 | 1 | 1 | 0 | 0 | 0 |
| Way-1 | 0 | 0 | 0 | 1 | 1 | 0 |
| Way-2 | 0 | 0 | 0 | 0 | 0 | 1 |
| Way-3 | 0 | 0 | 0 | 0 | 0 | 0 |

The LRU data write circuit 16 overwrites three bits of the 6-bit access history specified by the LRU write enable signal LE[A,B]. Table 2 shows the LRU write enable signal for every case of hit.

Table-2

| Hit | LE[0, 1] | LE[0, 2] | LE[0, 3] | LE[1, 2] | LE[1, 3] | LE[2, 3] |
|---|---|---|---|---|---|---|
| Way-0 | 1 | 1 | 1 | 0 | 0 | 0 |
| Way-1 | 1 | 0 | 0 | 1 | 1 | 0 |
| Way-2 | 0 | 1 | 0 | 1 | 0 | 1 |
| Way-3 | 0 | 0 | 1 | 0 | 1 | 1 |

The LRU data generator 16 generates new access history upon hit of way-L based on the Table-1 and Table-2, and writes the new access history to the specified bits. For example, if way-1 is hit, the LRU data write circuit 67 overwrites the bits W[0,1], W[1,2] and W[1,3] of the access history with the new data "011", whereby a new access history is obtained such that "0dd11d" wherein "d" is maintained at the previous bits of the access history.

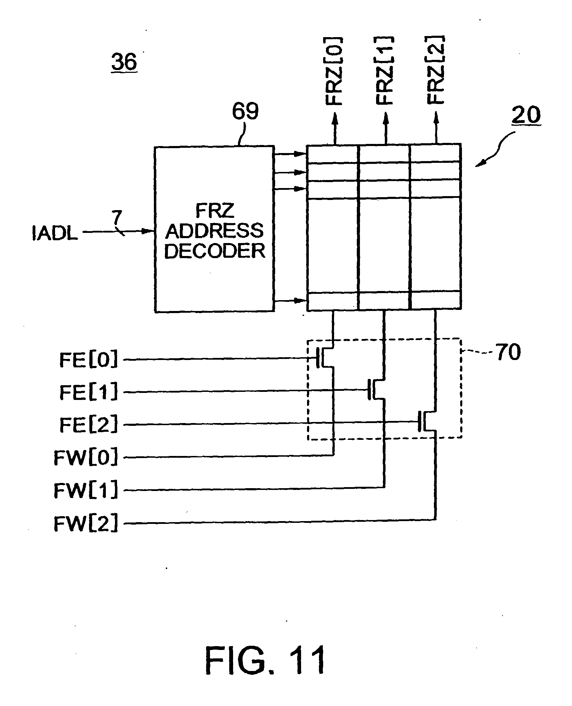

Referring to Fig. 11, the freeze information storage 36 includes a memory cell array 20, a freeze access decoder 69 and a freeze data write circuit 70.

The memory cell array (freeze memory array) 20 stores freeze information FRZ[] of the ways for each entry therein. The freeze data for ways way-0 to way-2 correspond to FRZ[0] to FRZ[2], respectively. If the stored freeze information FRZ[] assumes "1", then the corresponding data is subjected to freezing and not replaced by new accessed data, whereas if the stored freeze information assumes "0", then the corresponding data can be replaced by new accessed data.

The freeze memory array 20 is implemented by a SRAM having a memory capacity corresponding to the product of the number of ways minus one by the number of entries in each way, i.e., 3×64=192 bits. The memory capacity may be changed depending on the area to be subjected to freezing. For example, the memory capacity may have 4×64 bits for the case of freezing four ways, and have 1×64 bits for the case of freezing a single way.

The freeze address decoder 69 receives the index address IADL, which is intermediate six bits of the address signal supplied form the control unit 38, decodes the same to activate one of the word lines of the freeze memory array 20 for accessing. The freeze memory array 20 delivers a freeze information FRZ[0] to FRZ[2] of the selected entry to the replacement controller 37. In a modification of the embodiment, the freeze address decoder 69 may be omitted by using the LRU address decoder 66 for accessing the freeze memory array 20. In addition, the memory array 15 of the LRU information storage 35 and the freeze memory array 20 may be implemented by a single SRAM having common word lines, for example.

The freeze data write circuit 70 writes the freeze information in the freeze memory array 20 at the location specified by the index address IADL based on the freeze write data FW[] and the freeze write enable signal FE[] supplied from the control unit 38. For example, if way-K

$(0 \leqq K \leqq 2)$ is to be subjected to freezing, the freeze write data FW[K]=1 and the freeze write enabler signals FE[K]=1 and FE[A]=0 $(A \neq K)$ are supplied to the freeze data write circuit 70, which writes desired data to the freeze memory array 20.

Release of the way-K from the freezing can be conducted by setting the freeze write data FW[K] at "0" and the freeze write enable signal FE[K] at "1" in the control unit 38 and delivering the freeze write data FW[K] and the freeze write enable signal FE[] to the freeze data write circuit 70, which writes the freeze write data to the freeze memory array 20.

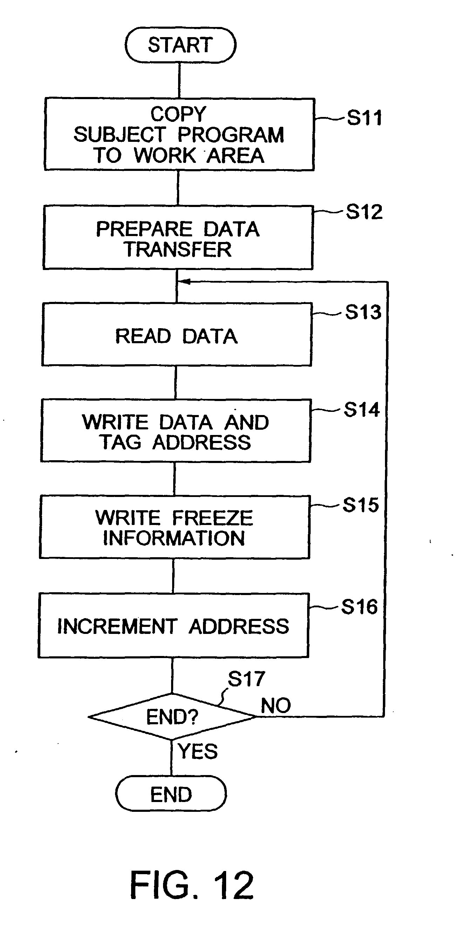

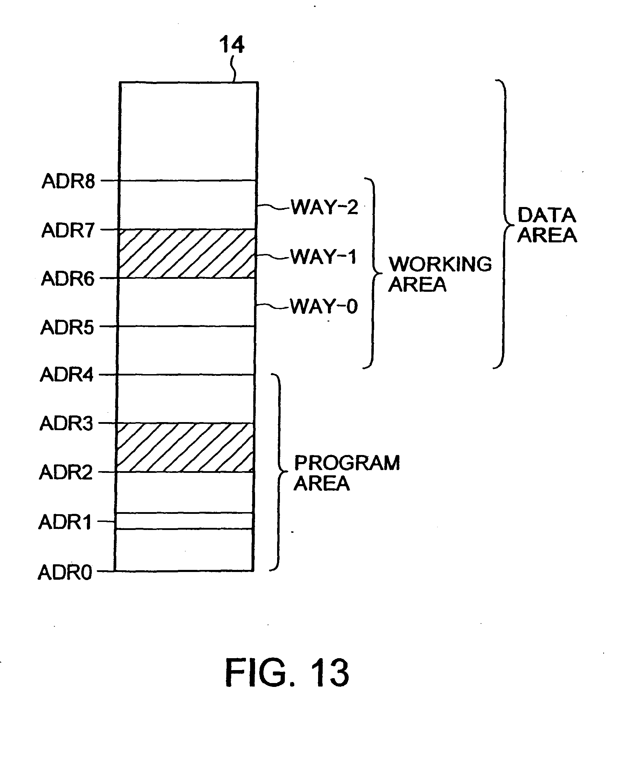

Referring to Fig. 12, there is shown a flowchart of procedure for writing freeze information to the freeze memory array 20 upon start of the computer system. In the procedure, the data stored in a specified location of the main storage device 14 is copied for storing the data in the cache memory 11 at a specified location by using a freeze I/O instruction. The main storage device 14 has a memory space, as shown in Fig. 13, including a program area between address $ADR_0$ and $ADR_4$-1, and a data area above address $ADR_4$. In this example, a program which is to be subjected to freezing is stored in the main storage device 14 between address $ADR_2$ and address $ADR_3$-1.

The data area includes a working area within the data area between address $ADR_5$ and $ADR_6$-1 for temporarily storing the program before transferring the program to the way-0 in the cache memory 11 for freezing. Similarly, the working areas between address $ADR_6$ and address $ADR_7$-1 and between address $ADR_7$ and address $ADR_8$-1 are disposed for way-1 and way-2. In this example, the program stored between address $ADR_2$ and address $ADR_3$-1 and to be subjected to freezing is to be transferred to the way-1.

In step S11 of Fig. 12, the program to be subjected to freezing is copied, by block copying, to the working area disposed for way-1 between address $ADR_6$ and address $ADR_7$-1, for preparation of copying the data in the working area to the way-1 by using a standard freeze I/O instruction which is built beforehand.

In step S12, the CPU 10 executes the freeze I/O instruction to set the start/end addresses of the main storage device at $ADR_2$/$ADR_3$-1 and the destination of the program at way-1. In an alternative, the CPU 10 may deliver the address information of the program in the main storage device separately from the way information, or may generate the address information based on the way information.

In step S13, the control unit 38 outputs an address signal BAD to the bus control unit (BCU) 12, and reads data BDT of the program from the main storage device 14. In this case, the read address is incremented from address $ADR_6$ to $ADR_7$-1.

In step S14, the control unit 38 delivers an index address IADD corresponding to the read address BAD, supplied in step S13, to the data memory 33, and the data BDT and a selection signal DSL to the selector 34, thereby storing the data DAT in way-1 of the data memory 33.

In step S15, the control unit 38 delivers an index address IADL corresponding to the read address BAD to the LRU information storage 35 and the freeze information storage 36, and delivers new accessed way information, i.e., NAW[1]=1 to the LRU information storage 35. The control unit 38 then delivers freeze write data FW[1]=1 and a freeze write enable signal FE[1]=1 to the freeze information storage 36, thereby writing freeze data FRZ[1]=1 to the address IADL of the freeze memory array 20 and setting the corresponding address of way-1 to freezing.

In step S16, the control unit 38 increments address DR. In step S17, the control unit examines whether or not the address ADR reaches the end address ADR7. If the address is below the end address, the step returns to step S13 for iterating the above procedure, and if the address reaches the end address, the freeze-transferring process is finished.

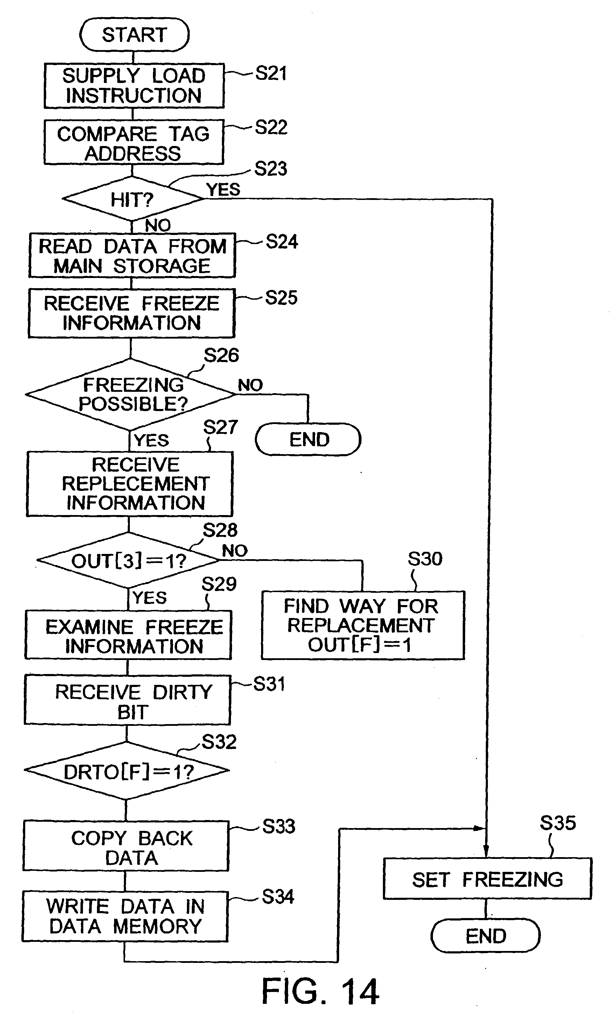

Referring to Fig. 14, there is shown a flowchart of another procedure for storing freeze information to the freeze memory array 20.

In this example, a program to be subjected to freezing and stored in address ADR1 of the main storage device (Fig. 13) is transferred to way-2 of the cache memory and is subjected to freezing by using a freeze instruction.

In step S21, a load instruction to read a single line of the program stored in address ADR1 of the main storage device 14 is supplied from the CPU, while providing address ADR1 to the control unit 38.

In step S22, the control unit 38 delivers an index address IADT corresponding to address ADR5 to the tag information storage 31, and delivers a tag address TAD to the comparator block 32.

In step S23, it is examined whether or not the comparator block 32 delivers a hit signal HIT[]. If the comparator block 32 delivers a hit signal, the step advances to step S35, and if not, the step advances step S24.

In step S24, the control unit 38 delivers an address signal BAD=ADR1 to the BCU 12, and reads out the data BDT to be subjected to freezing from the main storage device 14.

In step S25, the control unit 38 delivers an index address IADL corresponding to address ADR1 to the freeze information storage 36, and receives the freeze information FRZ[0]- FRZ[2].

In step S26, the control unit 38 judges whether or not freezing is possible. If one of the bits of freeze information FRZ[0] to FRZ[2] is "0", the control unit 38 judges that the freezing is possible and advances to step S27. On the other hand, if any of the bits of the freeze information is "1", the control unit judges that the freezing is not possible and ends the procedure.

In step S27, the control unit 38 delivers the index address IADL corresponding to address ADR1 to the LRU information storage 35, and receives a replacement signal OUT[0] to OUT[3].

In step S28, the control unit 38 examines the replacement signal OUT[0] to OUT[2]. The control unit 38 advances to step S30 if one of OUT[0] to OUT[2] is "1", whereas advances to step S29 if OUT[3] is "1".

In step S29, the control unit 38 examines the freeze information in the order of FRZ[2], FRZ[1] and FRZ[0], thereby detecting a way which is not subjected to freezing, i.e., a way (way-F) having a freeze information FRZ[F]=0. The way F detected first is determined as a subject way to be replaced, and the process advances to step S31.

In step S30, a way (way-F) having OUT[F]=1 is determined as a subject way to be replaced.

In step S31, the control unit 38 delivers an index address IADT corresponding to address ADR1 to the tag memory 31, thereby receiving a dirty bit read information DRTO[F].

In step S32, the control unit 38 examines the dirty bit read information DRTO[F], and advances to step S33 if DRTO[F] is "1" whereas advances to step S34 if DRTO[F] is "0".

In step S33, the control unit 38 delivers the index address IADD corresponding to address ADR1 to the data memory 33, receives the subject data DTM[F] to be replaced, and delivers the same to the BCU 12 and the index address IADT corresponding to address ADR1 to the tag memory 33. The control unit 38 receives the address TAM[F] of the subject way to be replaced, delivers the address signal BAD to the BCU 12, and copy back the content of the data memory 33 to the main storage device 14. Subsequently, the control unit 38 rewrites the dirty bit corresponding to the tag address TAD at "0".

In step S34, the control unit 38 writes the data BDT subjected to freezing in way-F of the data memory 33 to be replaced.

In step S35, the CPU 10 executes a freeze set instruction, thereby allowing the control unit 38 to deliver the index address corresponding to address ADR1 to the LRU information storage 35 and the freeze information storage 36 and to deliver the new accessed way information NAW[F]=1 to the LRU information storage 35. The control unit 38 delivers a freeze write data FW[F]=1 and freeze write enable signal FE[F]=1 to the freeze memory 36, thereby storing FRZ[F]=1 in the address IADL of the freeze memory array 20 and setting the corresponding address of way-F in a frozen state.

There are two more techniques for writing the freeze information to the freeze memory array 20, including a "preset technique" and an "on-demand technique". The preset technique is such that a program or numerical data desired for a high-speed processing is stored for freezing in the cache memory before the program is started or executed. More specifically, the preset operation is conducted by the CPU which reads the data from the main storage device from specified addresses, and directly writes the data to the data memory, tag memory and the freeze memory based on the I/O instruction.

The on-demand technique is such that a specific program or numerical data desired for a high-speed processing is first stored in the cache memory without freezing. During executing the program, the program or the data is subjected to freezing or released from the freezing. More specifically, the CPU reads the program or numerical data from the main storage device and delivers the same to the cache memory. The CPU reads the information for the way in which the program is stored, and then directly stores the instruction data for freezing or releasing from the freezing of the program in the entry address of the cache data and the bit of the freeze memory corresponding to the way.

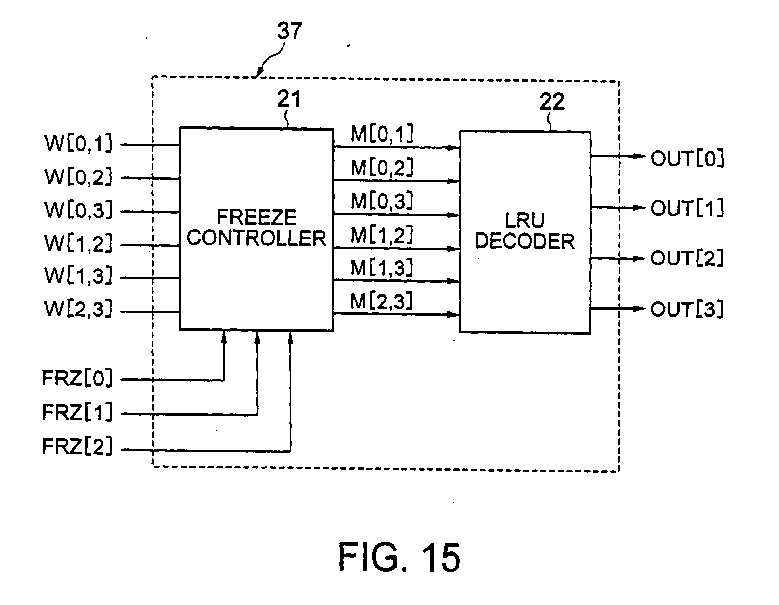

Referring to Fig. 15, the replacement controller 37 is implemented by a wired logic circuit, and includes a freeze controller 21 and a LRU decoder 22. The freeze controller is implemented by a plurality of logic elements, and receives a 6-bit access information W[0,1] to W[2,3] and a 3-bit freeze information FRZ[0] to FRZ[2], to deliver a 6-bit intermediate information M[0,1] to M[2,3].

The LRU decoder 22 is also implemented by a logic elements and delivers a replacement signal including three bits OUT[0] to OUT[3] based on the 6-bit intermediate information M[0,1] to M[2,3].

Now, operation of the replacement controller 37 will be described with the first case wherein all the bits FRZ[0] to FRZ[2] of the freeze information is "0" and thus no freeze processing is executed. In this case, M[A,B]=W[A,B] .

The LRU decoder 22 detects the least-recently-used way out of the four ways based on the 6-bit access history W[0,1] to W]2,3] read from the LRU information storage 35, thereby outputting a replacement signal OUT[0] to OUT[3]. In any case, one of the bits OUT[0] to OUT[3] of the replacement signal assumes "1" and the rest assume "0", wherein the way corresponding to the bit assuming "1" is to be replaced.

As understood from Fig. 7, for example, if way-0 is the least-recently-used way, the access history is such that W[0,1], W[0,2] and W[0,3] assume "0". From Fig. 7, the bits OUT[0] to OUT[3] of the replacement signal can be expressed in terms of the access history by the following equations:

$$OUT[0]=(!W[0,1]) \times (!W[0,2]) \times (!W[0,3]) \tag{1}$$

$$OUT[1]=( W[0,1]) \times (!W[1,2]) \times (!W[1,3]) \tag{2}$$

$$OUT[2]=( W[0,2]) \times ( W[1,2]) \times (!W[2,3]) \tag{3}$$

$$OUT[3]=( W[0,3]) \times (W[1,3] \times (W[2,3]) \tag{4}$$

wherein "!" disposed before a specific signal indicates that the signal attached with "!" is the inverse of the specified signal.

In a more generalized expression, in a N-way-set associative cache memory, the intermediate information M[A,B] includes a number (N(N-1)/2) of bits each defined between each two of the ways, i.e, way-A and way-B. Each bit M[A,B] of the intermediate information is defined in terms of access history W[A,B] and freeze information FRZ[A] and FRZ[B] as follows:

$$M[A,B]=W[A,B] + FRZ[A] \text{ wherein } 0 \leq A < B = N-1 \tag{5}$$

$$M[A,B]=(W[A,B]+FRZ[A]) \times !FRZ[B] \text{ wherein } 0 \leq A < B < N-1 \tag{6}$$

The intermediate information is calculated in the freeze controller 21.

The intermediate information is used to generate a replacement information in the LRU decoder 22. The replacement information is defined by the intermediate information as follows:

$$OUT[0]= \prod_{j=1}^{N-1} !M[0,j]$$

$$OUT[X]= \prod_{j=0}^{X-1} M[j,X] \times \prod_{j=X+1}^{N-1} !M[X,j] \text{ wherein } 0<X<N-1$$

$$OUT[N]= \prod_{j=0}^{N-2} M[j,N-1]$$

In general, the $\Pi$ function is defined as follows:

$$\prod_{i=0}^{n} f(i) = f(0) \times f(1) \times \cdots \times f(n)$$

In a more concrete form, the replacement information can be expressed as follows:

$$OUT[0]=!M[0,1] \times !M[0,2] \times \cdots \cdots \times !M[0,N-1]$$

$$OUT[1]=M[0,1] \times !M[1,2] \times \cdots \cdots \times !M[1,N-1]$$

$$OUT[2]=M[0,2] \times M[1,2] \times \cdots \cdots \times !M[0,N-1] \cdots \cdots .$$

$$OUT[N-1]=M[0,N-1] \times M[1,N-1] \times \cdots \times M[N-2,N-1]$$

In general, a 4-way-set associative cache memory has a freeze information in relation to three ways, i.e., FRZ[0], FRZ[1] and FRZ[2], with the remaining way (way-4) being a way to be replaced. In the 4-way-set associative cache memory, the intermediate information is expressed by the following equations:

$$M[0,1]=(W[0,1]+FRZ[0]) \times !FRZ[1]$$

$$M[0,2]=(W[0,2]+FRZ[0])\times!FRZ[2]$$

$$M[0,3]=(W[0,3]+FRZ[0])$$

$$M[1,2]=(W[1,2]+FRZ[1])\times!FRZ[2]$$

$$M[1,3]=(W[0,3]+FRZ[1])$$

$$M[2,3]=(W[2,3]+FRZ[2])$$

In this case, the replacement information is expressed by the following equations:

$$OUT[0]=!M[0,1]\times!M[0,2]\times!M[0,3]$$

$$OUT[1]=M[0,1]\times!M[1,2]\times!M[1,3]$$

$$OUT[2]=M[0,2]\times M[1,2]\times!M[2,3]$$

$$OUT[3]=M[0,3]\times M[1,3]\times M[2,3]$$

Next, a concrete example will be given to the intermediate information and the replacement information in a 4-way-set associative cache memory.

First, a case is considered wherein the freeze information is not considered in the cache memory and the access history indicates the access order of way-0, way-1- way-2 and way-3 in terms of most-recently-used basis, i.e., way-0←way-1←way-2←way-3 as shown on the top row of Fig. 7. In this case, the replacement information is as follows:

$$OUT[0]=!1\times!0\times!1=0,$$

$$OUT[1]=1\times!0\times!1=0,$$

$$OUT[2]=0\times0\times!1=0, \text{ and}$$

$$OUT\ 3=1\times1\times1=1.$$

Thus, way-3, which is least recently used, is the subject way to be replaced next.

In the present invention, however, because the LRU algorithm is modified by freeze information, the situation is different. It is assumed that the access history indicates an access order of way-3, way-1, way-2 and way-0 in terms of most-recently-used basis, as shown on the fourth row in the fourth data block for hit of way-3 (third row from the bottom) in Fig. 6, and way-0 is subjected to freezing beforehand. In this case, the access history indicates W[0,1], W[0,2], W[0,3], W[1,2], W[1,3] and W[2,3] = "000100" as shown in Fig. 6, whereas the freeze information indicates FRZ[0]=1, FRZ[1]=1 and FRZ[2]=1.

The intermediate information can be calculated as follows:

$$M[0,1]=(W[0,1]+FRZ[0])\times!FRZ[1]=1$$

$$M[0,2]=(W[0,2]+FRZ[0])\times!FRZ[2]=1$$

$$M[0,3]=(W[0,3]+FRZ[0])=1$$

$$M[1,2]=(W[1,2]+FRZ[1])\times!FRZ[2]=1$$

$$M[1,3]=(W[0,3]+FRZ[1])=0$$

$$M[2,3]=(W[2,3]+FRZ[2])=0$$

The results obtained by the above equations show that the access history represented in terms of the intermediate information corresponds to the access order of way-0, way-3, way-1 and way-2, shown at the fifth row in Fig. 6. That is, it may be expressed that although the access history itself stored in the LRU information storage is not changed, the access history supplied from the freeze controller in terms of the intermediate information is overwritten by the access order of way-0, way-3, way-1 and way-2, with the way-0 being the most-recently-used way.

The LRU decoder 22 delivers the replacement information as follows:

$$OUT[0]=!M[0,1] \times !M[0,2] \times !M[0,3]=0$$

$$OUT[1]=M[0,1] \times !M[1,2] \times !M[1,3]=0$$

$$OUT[2]=M[0,2] \times M[1,2] \times !M[2,3]=1$$

$$OUT[3]=M[0,3] \times M[1,3] \times M[2,3]=0$$

Thus, way-2 is replaced in accordance with the replacement information, with way-0 being not replaced in accordance with the freeze information.

In another example, it is assumed that way-0 and way-1 are subjected to freezing, in the case of access order of way-3, way-1, way-2 and way 0. In this case, the freeze information indicates FRZ[0] =1, FRZ[1]=1, and FRZ [2] = 0, whereas the access history indicates W[0,1], W[0,2], W[0,3], W[1,2], W[1,3] and W[2,3] = "00100".

The intermediate information can be calculated as follows:

$$M[0,1]=(W[0,1]+FRZ[0]) \times !FRZ[1]=0$$

$$M[0,2]=(W[0,2]+FRZ[0]) \times !FRZ[2]=1$$

$$M[0,3]=(W[0,3]+FRZ[0])=1$$

$$M[1,2]=(W[1,2]+FRZ[1]) \times !FRZ[2]=1$$

$$M[1,3]=(W[0,3]+FRZ[1])=1$$

$$M[2,3]=(W[2,3]+FRZ[2])=0$$

The results "011110" obtained by the above equations show that the access history represented in terms of the intermediate information corresponds to the access order of way-1, way-0, way-3 and way-2. That is, it may be expressed that although the access history itself stored in the LRU information storage remains unchanged, the access history supplied from the freeze controller 21 in terms of the intermediate information is overwritten by the access order of way-1, way-0, way-3 and way-2, with the way-0 and way-1 being the most-recently-used two ways.

The LRU decoder 22 delivers the replacement information as follows:

$$OUT[0]=!M[0,1] \times !M[0,2] \times !M[0,3]=0$$

$$OUT[1]=M[O,1] \times !M[1,2] \times !M[1,3]=0$$

$$OUT [2]=M[0,2] \times M[1,2] \times !M[2,3]=1$$

$$OUT[3]=M[0,3] \times M[1,3] \times M[2,3]=0$$

Thus, way-2 is replaced in accordance with the replacement information, with way-0 and way-1 being not replaced in accordance with the freeze information.

In the above embodiment, the effective access history expressed in terms of intermediate information is modified by the freeze information, with the access history itself expressed between each two of the ways being unchanged. This provides a simple configuration of the cache memory having a freeze function.

In the above examples, the access history, intermediate information (modified access history) and the replacement information are expressed in terms of positive logic. However, a negative logic may be used instead. In addition, each of the freeze controller 21 and the LRU decoder 22 of the replacement controller 37 may be implemented by a software program. In this case either, the original access history can be stored in the LRU information storage and used for generation of the intermediate information. It is not necessary that the LRU information storage store the access information in LRU itself so long as the LRU information can be obtained based on the stored access information.

In the present embodiment, since any number of ways except for the last way can be subjected to freezing, design choice for freezing can be obtained.

Furthermore, since the LRU information storage stores the most recent access history without modification, the cache memory may operate in only the LRU basis without modification by the freeze basis, if the freeze memory is reset to store zero freezing, after some operation of the cache memory in the freeze basis.

The freeze information storage stores the freeze information having N-1 bits for each entry, which requires onlya moderate number of bits for this purpose. For example, in the case of a 4-way-set associative cache memory having 64 entries, only 192=3×64 bits are sufficient for storing the freeze information. This provides a simple configuration of the cache memory. In addition, the LRU information storage itself is not rewritten after a miss-hit, the throughput of the cache memory can be improved.

In the present embodiment, since a plurality of ways can be subjected to freezing, a program having a large data can be stored in the cache memory for freezing. In a conventional cache memory, since only a single way can be subjected to freezing, a program having a large size exceeding the capacity of a single way cannot be subjected to freezing.

In general, it is requested that the semiconductor device can be fabricated in accordance with a small number of designs by slightly modifying the design to a specific requirement using a program. The cache memory according to the present invention can be applied to any of a cache memory operating in a LRU technique without a freeze function, a cache memory operating in a LRU technique modified by the freeze function, and a computer system using a cache memory having a part implemented by a high-speed ROM or RAM. Thus, a single design for the cache memory can be used for a variety of cache memories.

Especially, the configuration of the freeze controller, which converts the LRU information into the intermediate information, enables modification of the existing design for the cache memory operating in a LRU technique to obtain a cache memory having a freeze function by adding a simple elements in the cache memory.

Since the above embodiments are described only for examples, the present invention is not limited to the above embodiments and various modifications or alterations.

**Claims**

1. A cache memory device comprising a data storage section (33) including a plurality of ways each for storing desired data, a LRU information storage section (35) for storing access information reciting an access order of said plurality of ways, a freeze information storage section (36) for storing freeze information of at least one of said ways, a replacement controller (37) for generating a replacement information based on modified access information modified from said access information by using said freeze information without replacement of said access information stored in said LRU information storage section (35) by said modified access information, said replacement information preventing replacement of data in said at least one of said ways by new data.

2. The cache memory device as defined in claim 1, wherein said access information includes a plurality of bits each corresponding to a combination of two of said ways, and said replacement information includes a number of bits which is equal to a number of said ways.

3. The cache memory device as defined in claim 2, wherein said replacement controller (37) comprises a freeze controller (21) for generating said modified access information, and a decoder (22) for decoding said modified access information to generate said replacement information.

4. The cache memory as defined in claim 3, wherein each bit M[A,B] of said modified access information is represented by:

$$M[A,B]=W[A,B] + FRZ[A] \text{ for } 0 \leq A<B=N-1; \text{ and}$$

$$M[A,B]=(W[A,B]+FRZ[A])\times !FRZ[B] \text{ for } 0 \leq A<B<N-1,$$

wherein W[A,B], FRZ[A], FRZ[B], !FRZ[B] are a bit of said access history between way-A and way-B, a bit of said freeze information for way-A, a bit of said freeze information for way-B, and a reversed bit of freeze information for way-B.

5. The cache memory device as defined in claim 4, wherein each bit OUT[X] of said replacement information wherein $0 \leq X \leq N-i$ is represented by:

$$OUT[0]=\prod_{j=1}^{N-1} !M[0,j]$$

$$OUT[X]=\prod_{j=0}^{X-1} M[j,X]\times \prod_{j=X+1}^{N-1} !M[X,j] \text{ wherein } 0<X<N-1$$

$$OUT[N]=\prod_{j=0}^{N-2} M[j,N-1]$$

6. The cache memory device as defined in claim 1, wherein said freeze information includes a number of bits which is equal to a number of said ways minus one.

7. The cache memory device as defined in claim 6, wherein said modified access information is such that any of said ways subjected to freezing has an order between first and (N-1)st in terms of LRU among N said ways.

8. The cache memory device as defined in claim 1, wherein, said replacement controller (37) is implemented by a wired logic circuit.

9. A method for controlling a cache memory having a plurality of ways each for storing desired data, said method comprising the iterative steps of storing access information reciting an access history of the ways, storing freeze information of at least one of the ways, and generating a replacement information based on modified access information modified from said access information by using said freeze information without replacement of said stored access information by said modified access information.

10. The method as in claim 9, wherein said access information includes a plurality of bits each corresponding to a combination of two of said ways, and said replacement information includes a number of bits which is equal to a number of said ways.

11. The method as defined in claim 10; wherein each bit M[A,B] of said modified access information is represented by:

$$M[A,B]=W[A,B] + FRZ[A] \text{ for } 0\leqq A<B=N-1; \text{ and}$$

$$M[A,B]=(W[A,B]+FRZ[A])\times !FRZ[B] \text{ for } 0\leqq A<B<N-1,$$

wherein W[A,B], FRZ[A], FRZ[B], !FRZ[B] are a bit of said access history between way-A and way-B, a bit of said freeze information for way-A, a bit of said freeze information for way-B, and a reversed bit of freeze information for way-B, respectively.

12. The method as defined in claim 11, wherein each bit OUT[X] of said replacement information wherein $0\leqq X\leqq N-1$ is represented by:

$$OUT[0]=\prod_{j=1}^{N-1} !M[0,j]$$

$$OUT[X]=\prod_{j=0}^{X-1} M[j,X]\times \prod_{j=X+1}^{N-1} !M[X,j] \text{ wherein } 0<X<N-1$$

$$OUT[N]=\prod_{j=0}^{N-2} M[j,N-1]$$

**13.** The method as defined in claim 9, wherein said freeze information includes a number of bits which is equal to a number of said ways minus one.

FIG. 1

START

READ PRIORITY LEVEL
FROM PURGE REGISTER — S1

READ PRIORITY LEVEL
FROM LRU MEMORY — S2

SELECT WAY HAVING
FREEZE PRIORITY — S3

SET LRU PRIORITY
TO SELECTED WAY — S4

END OF FREEZE
PROCESSING — S5

END

# FIG. 2

EP 0 997 821 A1

| 40 | 52A | 52B | 52C |
|----|-----|-----|-----|

|  LRU  |  WAY-A  |  WAY-B  |  WAY-C  |
|-------|---------|---------|---------|

A>B>C ~ 40a

C>A>B ~ 40b

A>C>B ~ 40c

PRIORITY1 ~ 52Aa

PRIORITY2 ~ 52Ab

PRIORITY1 ~ 52Ac

PRIORITY2 ~ 52Ba

PRIORITY3 ~ 52Bb

PRIORITY3 ~ 52Bc

PRIORITY3 ~ 52Ca

PRIORITY1 ~ 52Cb

PRIORITY2 ~ 52Cc

# FIG. 3

FIG. 4

FIG. 5A

FIG. 5B

FIG. 5C

FIG. 5D

ACCESS HISTORY

| HIT | $t_4 \leftarrow t_3 \leftarrow t_2 \leftarrow t_1$ | W[0,1] | W[0,2] | W[0,3] | W[1,2] | W[1,3] | W[2,3] |
|---|---|---|---|---|---|---|---|
| WAY-0 | 0 1 2 3 | 1 | 1 | 1 | 1 | 1 | 1 |
|  | 0 1 3 2 | 1 | 1 | 1 | 1 | 1 | 0 |
|  | 0 2 1 3 | 1 | 1 | 1 | 0 | 1 | 1 |
|  | 0 2 3 1 | 1 | 1 | 1 | 0 | 0 | 1 |
|  | 0 3 1 2 | 1 | 1 | 1 | 1 | 0 | 0 |
|  | 0 3 2 1 | 1 | 1 | 1 | 0 | 0 | 0 |
| WAY-1 | 1 0 2 3 | 0 | 1 | 1 | 1 | 1 | 1 |
|  | 1 0 3 2 | 0 | 1 | 1 | 1 | 1 | 0 |
|  | 1 2 0 3 | 0 | 0 | 1 | 1 | 1 | 1 |
|  | 1 2 3 0 | 0 | 0 | 0 | 1 | 1 | 1 |
|  | 1 3 0 2 | 0 | 1 | 0 | 1 | 1 | 0 |
|  | 1 3 2 0 | 0 | 0 | 0 | 1 | 1 | 0 |
| WAY-2 | 2 0 1 3 | 1 | 0 | 1 | 0 | 1 | 1 |
|  | 2 0 3 1 | 1 | 0 | 1 | 0 | 0 | 1 |
|  | 2 1 0 3 | 0 | 0 | 1 | 0 | 1 | 1 |
|  | 2 1 3 0 | 0 | 0 | 0 | 0 | 1 | 1 |
|  | 2 3 0 1 | 1 | 0 | 0 | 0 | 0 | 1 |
|  | 2 3 1 0 | 0 | 0 | 0 | 0 | 0 | 1 |
| WAY-3 | 3 0 1 2 | 1 | 1 | 0 | 1 | 0 | 0 |
|  | 3 0 2 1 | 1 | 1 | 0 | 0 | 0 | 0 |
|  | 3 1 0 2 | 0 | 1 | 0 | 1 | 0 | 0 |
|  | 3 1 2 0 | 0 | 0 | 0 | 1 | 0 | 0 |
|  | 3 2 0 1 | 1 | 0 | 0 | 0 | 0 | 0 |
|  | 3 2 1 0 | 0 | 0 | 0 | 0 | 0 | 0 |

FIG. 6

## ACCESS HISTORY

| | $t_4 \leftarrow t_3 \leftarrow t_2 \leftarrow t_1$ | W[0,1] | W[0,2] | W[0,3] | W[1,2] | W[1,3] | W[2,3] |
|---|---|---|---|---|---|---|---|
| OUT [0] | 3 2 1 0 | 0 | 0 | 0 | 0 | 0 | 0 |
| | 2 3 1 0 | 0 | 0 | 0 | 0 | 0 | 1 |
| | 3 1 2 0 | 0 | 0 | 0 | 1 | 0 | 0 |
| | 1 3 2 0 | 0 | 0 | 0 | 1 | 1 | 0 |
| | 2 1 3 0 | 0 | 0 | 0 | 0 | 1 | 1 |
| | 1 2 3 0 | 0 | 0 | 0 | 1 | 1 | 1 |
| OUT [1] | 3 2 0 1 | 1 | 0 | 0 | 0 | 0 | 0 |
| | 2 3 0 1 | 1 | 0 | 0 | 0 | 0 | 1 |
| | 3 0 2 1 | 1 | 1 | 0 | 0 | 0 | 0 |
| | 0 3 2 1 | 1 | 1 | 1 | 0 | 0 | 0 |
| | 2 0 3 1 | 1 | 0 | 1 | 0 | 0 | 1 |
| | 0 2 3 1 | 1 | 1 | 1 | 0 | 0 | 1 |
| OUT [2] | 3 1 0 2 | 0 | 1 | 0 | 1 | 0 | 0 |
| | 1 3 0 2 | 0 | 1 | 0 | 1 | 1 | 0 |
| | 3 0 1 2 | 1 | 1 | 0 | 1 | 0 | 0 |
| | 0 3 1 2 | 1 | 1 | 1 | 1 | 0 | 0 |
| | 1 0 3 2 | 0 | 1 | 1 | 1 | 1 | 0 |
| | 0 1 3 2 | 1 | 1 | 1 | 1 | 1 | 0 |
| OUT [3] | 2 1 0 3 | 0 | 0 | 1 | 0 | 1 | 1 |
| | 1 2 0 3 | 0 | 0 | 1 | 1 | 1 | 1 |
| | 2 0 1 3 | 0 | 0 | 1 | 0 | 1 | 1 |
| | 0 2 1 3 | 1 | 1 | 1 | 0 | 1 | 1 |
| | 1 0 2 3 | 0 | 1 | 1 | 1 | 1 | 1 |
| | 0 1 2 3 | 1 | 1 | 1 | 1 | 1 | 1 |

## FIG. 7

FIG. 8

EP 0 997 821 A1

FIG. 9

FIG. 10

EP 0 997 821 A1

FIG. 11

FIG. 12

14

FIG. 13

START

SUPPLY LOAD
INSTRUCTION ⎯ S21

COMPARE TAG
ADDRESS ⎯ S22

HIT? ⎯ S23
— YES →

NO

READ DATA FROM
MAIN STORAGE ⎯ S24

RECEIVE FREEZE
INFORMATION ⎯ S25

FREEZING
POSSIBLE? ⎯ S26
— NO →

YES

END

RECEIVE
REPLECEMENT
INFORMATION ⎯ S27

OUT[3]=1? ⎯ S28
— NO →

YES

EXAMINE FREEZE
INFORMATION ⎯ S29

FIND WAY FOR
REPLACEMENT
OUT[F]=1 ⎯ S30

RECEIVE DIRTY
BIT ⎯ S31

DRTO[F]=1? ⎯ S32

COPY BACK
DATA ⎯ S33

WRITE DATA IN
DATA MEMORY ⎯ S34

SET FREEZING ⎯ S35

END

FIG. 14

EP 0 997 821 A1

37

21

22

W[0,1] →
W[0,2] →
W[0,3] →
W[1,2] → | FREEZE CONTROLLER |
W[1,3] →
W[2,3] →

M[0,1] →
M[0,2] →
M[0,3] →
M[1,2] →
M[1,3] →
M[2,3] →

| LRU DECODER |

→ OUT[0]
→ OUT[1]
→ OUT[2]
→ OUT[3]

FRZ[0] →
FRZ[1] →
FRZ[2] →

# FIG. 15

European Patent Office

## EUROPEAN SEARCH REPORT

Application Number

EP 99 12 1146

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | "ALTERATION OF A PARTIAL LRU ALGORITHM TO TEMPORARILY PREVENT SPECIFIC SLOT SELECTIONS" IBM TECHNICAL DISCLOSURE BULLETIN,US,IBM CORP. NEW YORK, vol. 33, no. 5, 1 October 1990 (1990-10-01), pages 405-406, XP000107575 ISSN: 0018-8689 * the whole document * | 1-13 | G06F12/12 |
| Y | US 5 584 014 A (NAYFEH BASEM A ET AL) 10 December 1996 (1996-12-10) * column 1, line 52 - column 2, line 26 * * column 5, line 45 - column 6, line 27; figures 3,4 * | 1,9 | |
| Y | US 5 737 753 A (ADELMEYER THOMAS JOHN ET AL) 7 April 1998 (1998-04-07) * column 3, line 62 - column 7, line 6; figures 2-7 * | 1-13 | |
| Y | US 4 361 878 A (LANE THOMAS A ET AL) 30 November 1982 (1982-11-30) * column 2, line 6 - column 4, line 33; figure 1 * | 1-13 | TECHNICAL FIELDS SEARCHED (Int.Cl.7) G06F |
| Y | US 4 513 367 A (CHAN SHIU K ET AL) 23 April 1985 (1985-04-23) * column 8, line 49 - column 11, line 19; figure 8 * | 1-13 | |

The present search report has been drawn up for all claims

| Place of search | Date of completion of the search | Examiner |
|---|---|---|
| MUNICH | 1 March 2000 | Weber, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 0 997 821 A1

**ANNEX TO THE EUROPEAN SEARCH REPORT
ON EUROPEAN PATENT APPLICATION NO.**

EP 99 12 1146

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2000

| Patent document cited in search report | | Publication date | Patent family member(s) | | Publication date |
|---|---|---|---|---|---|
| US 5584014 | A | 10-12-1996 | JP | 8235072 A | 13-09-1996 |
| US 5737753 | A | 07-04-1998 | JP | 6067980 A | 11-03-1994 |
| US 4361878 | A | 30-11-1982 | AU | 540863 B | 06-12-1984 |
| | | | AU | 7603881 A | 06-05-1982 |
| | | | CA | 1185014 A | 02-04-1985 |
| | | | EP | 0050919 A | 05-05-1982 |
| | | | JP | 2054586 B | 22-11-1990 |
| | | | JP | 57100683 A | 22-06-1982 |
| US 4513367 | A | 23-04-1985 | EP | 0061570 A | 06-10-1982 |
| | | | JP | 1338000 C | 29-09-1986 |
| | | | JP | 57158081 A | 29-09-1982 |
| | | | JP | 61002975 B | 29-01-1986 |

For more details about this annex : see Official Journal of the European Patent Office, No. 12/82

34